# EUROPÄISCHE PATENTSCHRIFT

(11) **EP 1 140 480 B1**
(45) Veröffentlichungstag und Bekanntmachung des Hinweises auf die Patenterteilung: **16.04.2003**
(21) Anmeldenummer: 00902579.2
(22) Anmeldetag: 11.01.2000
(51) Int. Cl.: B31B 19/14, B29D 23/20, B26D 3/16, B29C 53/10

(54) **VERFAHREN ZUR KONTINUIERLICHEN HERSTELLUNG VON ROHRKÖRPERN**
METHOD FOR THE CONTINUOUS PRODUCTION OF TUBULAR BODIES
PROCEDE DE PRODUCTION EN CONTINU DE CORPS TUBULAIRES

(30) Priorität: 11.01.1999 DE 19900670
(43) Veröffentlichungstag der Anmeldung: 10.10.2001
(73) Patentinhaber: AISA AUTOMATION INDUSTRIELLE SA, 1896 Vouvry (CH)
(72) Erfinder: KELLER, Gerhard, CH-1805 Jongny (CH)
(74) Vertreter: Patentanwälte Zellentin & Partner
(86) Internationale Anmeldenummer: EP0000131
(87) Internationale Veröffentlichungsnummer: WO00041876

(56) Entgegenhaltungen:
- EP-A- 0 117 730
- WO-A-98/31532
- DE-A- 19 522 169
- GB-A- 1 491 053
- US-A- 3 572 220

## Beschreibung

Die Erfindung betrifft ein Verfahren zur kontinuierlichen Herstellung von Rohrkörpern mit einer innenliegenden Längstrennwand für die Herstellung von Tuben mit zwei voneinander getrennten Kammern, wobei ein endloser Rohrstrang mit innenliegender Längstrennwand hergestellt wird, von dem mittels einer Schneidvorrichtung abgelängte einzelne Rohrkörper mit vorgegebener Länge zur Weiterverarbeitung abgetrennt werden sowie eine Vorrichtung zur Durchführung des Verfahrens.

Aus der DE-A1- 195 22 169 ist ein derartiges Verfahren bekannt, wobei die auf die gewünschte Länge abgeschnittenen Tubenrohrkörper mit einem Tubenkopf mit einer Trennwand fest verbunden werden.

Aus der US-A-3 572 220 ist es für einen Hohlkörper mit drei parallelen Strängen mit rechteckigem Querschnitt bekannt, diesen flachzulegen und dann mittels rotierender Messer abzulängen.

Beim Einsatz derartiger Querschneider für runde Tubenrohrstränge mit innenliegender Trennwand, wobei die Trennwand sich vorzugsweise im Bereich des Durchmessers erstreckt, ergeben sich Probleme, weil sich dann durch das Flachlegen des Tubenrohrstranges für den Schnitt statt der üblichen insgesamt zwei Knicke im Randbereich insgesamt sechs Knicke durch die etwa dem Durchmesser entsprechende kurze Trennwand im Vergleich zu den flachgelegten breiteren Rohrwandabschnitten ergeben, die für die Weiterverarbeitung ungünstige Voraussetzungen bilden. Beispielsweise wird durch das Flachlegen die innere Trennwand stark gezogen und es besteht die Gefahr der Ablösung der Verbindungsnaht vom Rohrkörper, wodurch die Dichtheit der Kammern verletzt würde. Durch mehrere Knicke wird auch das Aussehen der Tube in Mitleidenschaft gezogen.

Aufgabe der Erfindung ist es, ein Verfahren der eingangs genannten Art dahingehend zu verbessern, daß auch Tubenrohrkörper mit innenliegender Längstrennwand durch eine Schneidvorrichtung ohne zusätzliche Knicke beschädigungslos in beliebigen Längen ablängbar sind sowie eine Vorrichtung zur Durchführung des Verfahrens anzugeben.

Diese Aufgabe wird durch ein Verfahren mit den Merkmalen des Anspruchs 1 sowie durch eine Vorrichtung mit den Merkmalen des Anspruchs 2 gelöst. Nachstehend wird die Erfindung anhand eines Ausführungsbeispiels unter Bezug auf Zeichnungen näher erläutert. Es zeigt:
- Fig. 1: ein Halbprodukt eines Rohrkörpers mit befestigter Trennwand im Querschnitt;
- Fig. 2: einen Tubenrohrkörper mit innenliegender Längstrennwand im Querschnitt;
- Fig. 3a: die Position eines Rohrkörpers mit innenliegender Trennwand zwischen zwei rotierenden Messern eines Querschneiders;
- Fig. 3b: die flachgelegte Position des Rohrkörpers mit innenliegender Trennwand unmittelbar vor einem Schnitt;
- Fig. 4: die Schnittposition eines Rohrkörpers mit innenliegender Trennwand bei herkömmlicher Verwendung eines Querschneiders gemäß dem Stand der Technik.

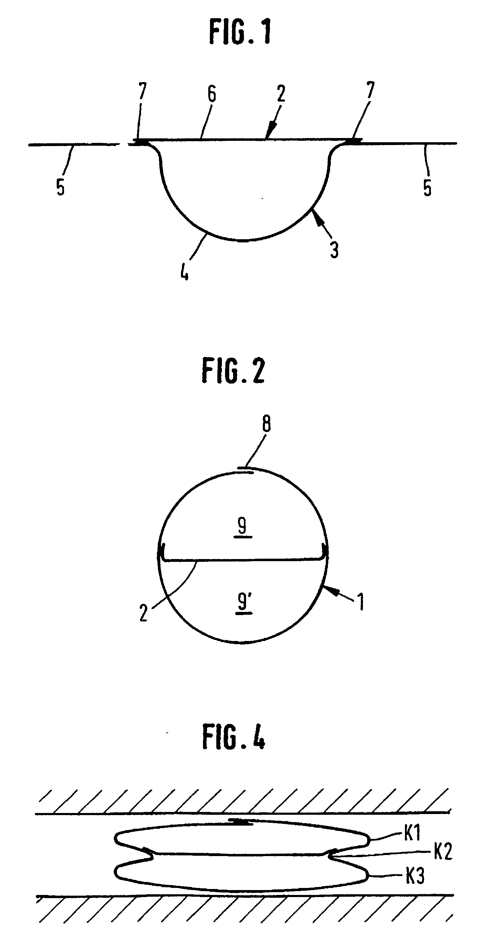

In Fig. 1 ist ein Halbprodukt eines Rohrkörpers 1 mit Trennwand 2 im Querschnitt dargestellt, der aus einer Folie 3 mit einem zentralen halbkreisförmigen Teil 4 und zwei abgewinkelten Seitenflügeln 5 besteht, wobei der halbkreisförmige Teil 4 durch eine zweite Folie 6, die später als Trennwand 2 dient, überdeckt ist. Die Ränder 7 der zweiten Folie 6 sind unmittelbar am an den halbkreisförmigen Teil 4 angrenzenden Bereich der Seitenflügel 5 abgedichtet befestigt. In einem zweiten Schritt werden die freien Enden der Seitenflügel 5 durch Herstellung einer Überlappungsnaht 8 miteinander verbunden, wodurch ein Rohrkörper 1 mit innenliegender entlang seinem Durchmesser angeordneter Trennwand 2 gebildet wird, dessen Querschnitt in Fig. 2 wiedergegeben ist.

Durch die Trennwand 2 wird der Rohrkörper 1 in zwei gleich große Kammern 9, 9' unterteilt.

Würde nun ein derartig hergestellter Rohrkörperstrang nach bekannter Art und Weise in einem Querschneider abgelängt, wozu er flachgelegt werden muß, ergäbe sich die in Fig. 4 dargestellte Schnittposition mit drei Knicken K1, K2, K3 an jeder Seite, die die oben beschriebenen negativen Folgen verursachen können.

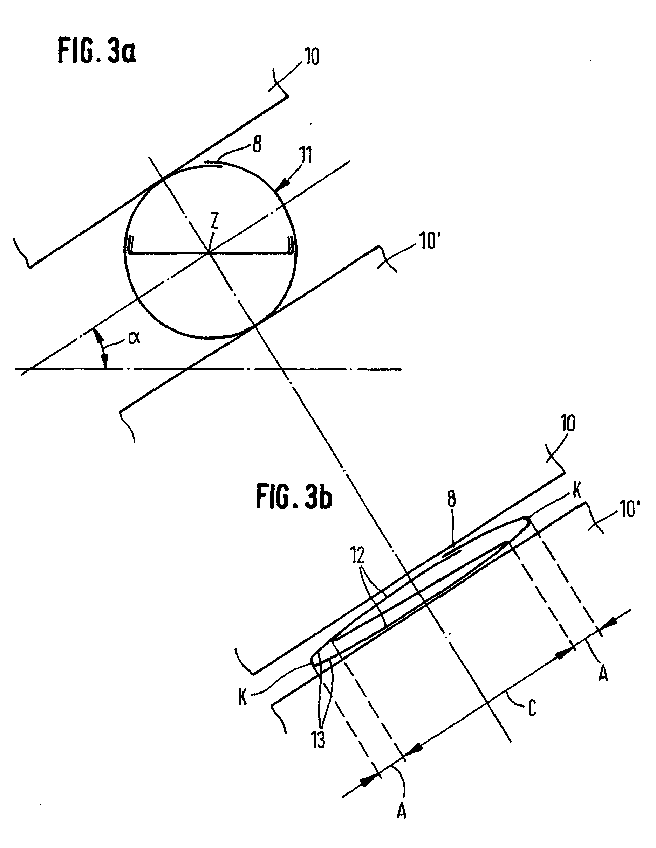

In Fig. 3 ist eine erfindungsgemäße Lösung dargestellt.

In Fig. 3a ist die gegenseitige Position der rotierenden Messer 10, 10' eines Querschneiders, ausgerichtet zu einem Rohrkörperstrang 11 mit waagerecht liegender Trennwand 2, die ihn symmetrisch teilt, wiedergegeben. Hierbei sind die Messer 10, 10' um den Winkel α in bezug auf die waagerecht angeordnete Trennwand 2 um die zentrale Achse Z des hier runden Rohrkörpers 1 gedreht und arretiert angeordnet. Unter den gegebenen Bedingungen ist der Winkel α gleich 32,66°. Es besteht auch die Möglichkeit die Messer waagerecht anzuordnen und den Rohrkörper 1 um den Winkel α gedreht den Messern zuzuführen (nicht dargestellt).

In Fig. 3b ist der flachgelegte Tubenrohrstrang unmittelbar vor einem Schnitt dargestellt, wobei er einen zentralen dreischichtigen Bereich C, der aus der flachgelegten Trennwand 2 und einem jeweils über- und unterlagernden Wandabschnitt 12, 12' und zwei sich an beiden Enden des Bereichs C anschließenden zweischichtigen Bereichen A, A', die lediglich aus umgebogenen (U-förmigen) übereinanderliegenden Wandabschnitten 13, 13' bestehen. Aus dieser Figur wird deutlich, daß hier an jeder Seite nur ein Knick K entsteht, wie das auch bei einem Rohrkörper ohne Trennwand der Fall ist. Als Material können beliebige ein- oder mehrschichtige Kunststofffolien mit und ohne Sperrschichten aus Kunststoffen, Aluminium oder Glas verwendet werden. Es können alle runden oder gerundeten, z.B. ovalen Rohrkörper mit einer Trennwand eingesetzt werden, deren Breite geringer ist als die des flachgelegten Rohrkörpers.

## Patentansprüche

1. Verfahren zur kontinuierlichen Herstellung von Rohrkörpern (1) mit einer innenliegenden Längstrennwand (2) für die Herstellung von Tuben mit zwei voneinander getrennten Kammern (9,9'), wobei ein endloser Rohrstrang (11) mit innenliegender Längstrennwand (2) und einer Überlappungsnaht (8) hergestellt wird, von dem mittels einer Schneidvorrichtung abgelängte einzelne Rohrkörper (1) mit vorgegebener Länge zur Weiterverarbeitung abgetrennt werden,
**dadurch gekennzeichnet, daß** der Rohrkörper (1) aus einer ersten Folie (3) mit einem zentralen halbkreisförmigen Teil (4) und zwei abgewinkelten Seitenflügeln (5) hergestellt ist, wobei der halbkreisförmige Teil (4) durch eine als Trennwand (2) dienende zweite Folie (6) überdeckt ist und daß als Schneidvorrichtung ein Querschneider mit zwei rotierenden Messern (10, 10') dient und der hergestellte gerundete Rohrstrang (11) mit Längstrennwand (2) zwischen die zwei rotierenden Messer (10,10') derart flachgelegt und ausgerichtet zugeführt wird, daß der flach gelegte Tubenrohrstrang (11) einen zentralen dreischichtigen Bereich (C) aus der flach und gestreckt ausgerichteten Trennwand (2) in der Mitte und einem flach überlagernden und einem flach unterlagernden Rohrkörperwandabschnitt (12) sowie zwei sich an den dreischichtigen Bereich beidseitig anschließende zweischichtige Bereiche (A, A') aufweist, wobei jeder zweischichtige Bereich (A, A') aus umgebogenen übereinanderliegenden Rohrkörperwandabschnitten (13) besteht.

2. Vorrichtung mit Mitteln zur Durchführung des Verfahrens nach Anspruch 1,
**dadurch gekennzeichnet, daß** die parallelen Drehachsen der rotierenden Messer (10, 10'), zwischen die der Tubenrohrstrang (11) zugeführt wird, um die zentrale Achse (Z) des Tubenrohrstrangs (11) mit innenliegender Längstrennwand (2) gemeinsam dreh- und arretierbar angeordnet sind.

## Claims

1. Method for the continuous production of tubular bodies (1) with an internal longitudinal partition (2) for the production of tubes with two chambers (9, 9') separated from one another, a continuous tube run (11) with an internal longitudinal partition (2) and an overlapping seam (8) being produced, from which individual tubular bodies (1) of a preset length which have been cut to length by means of a cutting device are separated for further processing, **characterised in that** the tubular body (1) is produced from a first foil (3) with a central semicircular part (4) and two angled side wings (5), the semicircular part (4) being covered by a second foil (6) serving as a partition (2) and **in that** a cross cutter with two rotating blades (10, 10') serves as a cutting device and the produced rounded pipe run (11) with longitudinal partition (2) is fed laid flat and oriented between the two rotating blades (10, 10') in such a way that the tube run (11) which has been laid flat comprises a central three-layered region (C) made of the partition (2) oriented in a flat and stretched manner in the middle and a flat overlying tubular body wall portion (12) and a flat underlying tubular body wall portion (12) and two two-layered regions (A, A') adjacent on either side to the three-layered region, each two-layered region (A, A') consisting of bent, superimposed tubular body wall portions (13).

2. Device with means for carrying out the method according to claim 1, **characterised in that** the parallel rotational axes of the rotating blades (10, 10') are fed between those of the tube run (11) and arranged so as to be jointly rotatable and stoppable about the central axis (Z) of the tube run (11) with internal longitudinal partition (2).

## Revendications

1. Procédé de production continue de corps tubulaires (1) comportant une paroi de séparation longitudinale interne (2) pour la production de tubes comportant deux chambres séparées (9, 9'), permettant de produire une ligne de tubes sans fin (11) avec une paroi de séparation longitudinale interne (2) et une couture de chevauchement (8), de laquelle sont séparés par l'intermédiaire d'un dispositif de coupe des corps tubulaires individuels mis à longueur (1), ayant une longueur prédéterminée, en vue d'un traitement ultérieur, **caractérisé en ce que** le corps tubulaire (1) est produit à partir d'une première feuille (3) comportant une partie centrale semi-circulaire (4) et deux ailes latérales coudées (5), la partie semi-circulaire (4) étant recouverte d'une deuxième feuille (6) servant de paroi de séparation (2), le dispositif de coupe étant constitué par un dispositif à coupe transversale comportant deux lames rotatives (10, 10'), la ligne de tubes arrondie produite (11) étant amenée avec la paroi de séparation longitudinale (2) entre les deux lames rotatives (10, 10') dans un état aplati et orienté tel que la ligne de tubes aplatie (11) comporte une région centrale à trois couches (C ) composée d'une paroi de séparation à orientation plate et étirée (2) au milieu et d'une section de paroi du corps tubulaire (12) superposée à plat et agencée à plat au-dessous, ainsi que de deux régions à deux couches (A, A') reliées des deux côtés à la région à trois couches, chaque région à deux couches (A, A') étant composée de sections superposées et repliées de la paroi du corps tubulaire (13).

2. Dispositif comprenant des moyens pour exécuter le procédé selon la revendication 1, **caractérisé en ce que** les axes de rotation parallèles des lames rotatives (10, 10') entre lesquelles est amenée la ligne de tubes (1) sont agencés autour de l'axe central (Z) de la ligne de tubes (1) comportant la paroi de séparation longitudinale interne (2) de sorte à pouvoir être tournés et arrêtés ensemble.
